# EUROPÄISCHE PATENTSCHRIFT

(11) **EP 1 948 670 B1**
(45) Veröffentlichungstag und Bekanntmachung des Hinweises auf die Patenterteilung: **24.11.2010**
(21) Anmeldenummer: 06793548.6
(22) Anmeldetag: 15.09.2006
(51) Int. Cl.: C07F 9/22, C07B 63/00

(54) **VERFAHREN ZUR ABTRENNUNG VON SÄUREN AUS CHEMISCHEN REAKTIONSGEMISCHEN MIT HILFE UNPOLARER TERTIÄRER AMINE**
METHOD OF SEPARATING ACIDS FROM CHEMICAL REACTION MIXTURES BY MEANS OF APOLAR TERTIARY AMINES
PROCEDE DE SEPARATION D'ACIDES DE MELANGES REACTIONNELS CHIMIQUES A L'AIDE D' UNE AMINE TERTIAIRE NON POLAIRE

(30) Priorität: 08.11.2005 DE 102005053540
(43) Veröffentlichungstag der Anmeldung: 30.07.2008
(60) Teilanmeldung: 10156176.9
(73) Patentinhaber: BASF SE, 67056 Ludwigshafen (DE)
(72) Erfinder: HUTTENLOCH, Oliver, 75228 Ispringen (DE); DECK, Patrick, 68165 Mannheim (DE); GANZ, Holger, 67067 Ludwigshafen (DE); MAUSS, Michael, 67434 Neustadt (DE); KÖRNIG, Wolfgang, 69181 Leimen (DE); BOCK, Michael, 67152 Ruppertsberg (DE)
(86) Internationale Anmeldenummer: PCT/EP2006/066397
(87) Internationale Veröffentlichungsnummer: WO 2007/054392

(56) Entgegenhaltungen:
- EP-A1- 0 119 487
- WO-A-91/01294
- WO-A-98/31693
- WO-A-2005/061416
- GB-A- 1 398 545

## Beschreibung

Die vorliegende Erfindung betrifft ein Verfahren zur vereinfachten Abtrennung von Säuren aus Reaktionsgemischen mittels unpolarer tertiärer Amine.

Der Fachmann hat oft das Problem, während einer chemischen Reaktion freigesetzte Säuren abzufangen oder Säuren aus Reaktionsgemischen abzutrennen. Beispiele für Reaktionen, in denen Säuren im Reaktionsverlauf freigesetzt werden, sind die Silylierung von Alkoholen oder Aminen mit Halogensilanen, die Phosphorylierung von Aminen oder Alkoholen mit Phosphorhalogeniden, die Bildung von Sulfonsäureestern oder -amiden aus Alkoholen oder Aminen und Sulfonsäurechloriden oder -anhydriden sowie die Bildung von Acylverbindungen aus Säurehalogeniden oder Anhydriden und Alkoholen oder Aminen.

Üblicherweise ist es notwendig, diese freigesetzten Säuren mit einer Base unter Salzbildung zu binden, um Neben- und Folgereaktionen des Wertprodukts zu unterbinden oder einfach um die Säure aus dem gewünschten Reaktionsprodukt zu entfernen.

Verfahren zur Abtrennung von Säuren aus chemischen Reaktionsgemischen sind in WO 03/062171 und WO 2005/061416 beschrieben. Durch diese Verfahren der Abtrennung von Säuren mit Hilfe von ionischen Flüssigkeiten können typischerweise unpolare Wertprodukte von Säuren in chemischen Reaktionsgemischen getrennt werden. Man nutzt dafür eine Phasenseparation zwischen dem unpolaren Wertprodukt und einer polaren ionischen Flüssigkeit, resultierend aus Säure und zugesetzter Base, aus. Falls das Wertprodukt jedoch einen zu polaren Charakter hat, wird die Phasenseparation zwischen Wertprodukt und ionischer Flüssigkeit gestört bzw. unmöglich gemacht. Polare Wertprodukte sind nach den in WO 03/062171 und WO 2005/061416 beschriebenen Konzepten nicht isolierbar.

WO 98/31693 beschreibt ein Verfahren zur Herstellung von Thiophophorsäuretriamiden, bei dem während der Reaktion gebildetes Ammoniumchlorid in einem großen Überschuss an flüssigem Ammoniak gelöst und so vom Wertprodukt, welches sich in der organischen Phase befindet, abgetrennt wird.

WO 91/01294 offenbart ein Verfahren zur Herstellung von tertiären Amin-Schwefeltrioxid-Komplexen durch Umsetzung von Chlorsulfonsäure mit tertiären Aminen und anschließender Zugabe von Ammoniak und Wasser. Das unlösliche Produkt wird durch Filtration isoliert.

GB 1 398 545 beschreibt ein Trennverfahren zur Isolierung von Bis(dimethylamino)-phosphorsäurechlorid oder Phosphorsäuretris(dimethylamid). Das Nebenprodukt Dimethylammoniumchlorid wird mit Wasser extrahiert und das Wertprodukt anschließend destilliert. Eine Hilfsbase wird nicht verwendet.

Eine Aufgabe dieser Erfindung bestand darin, ein Verfahren zur Abtrennung von Säuren aus chemischen Reaktionsgemischen mit Phosphorsäurediesteramiden, Phosphorsäureesterdiamiden, Phosphorsäuretriamiden, Phosphorigsäurediesteramiden, Phosphorigsäureesterdiamiden, Phosphorigsäuretriamiden, Thiophosphorsäurediesteramiden, Thiophosphorsäureesterdiamiden oder Thiophosphorsäuretriamiden als Wertprodukten mit geringer Wasserlöslichkeit zu finden, bei dem eine verfahrenstechnisch einfache flüssig-flüssig-Phasentrennung erfolgen kann.

Die Aufgabe wurde erfindungsgemäß dadurch gelöst, dass zur Abtrennung der Säuren eine Hilfsbase eingesetzt wird, die ein unpolares tertiäres Amin ist.

Gegenstand der Erfindung ist ein Verfahren zur Abtrennung von Säuren aus Reaktionsgemischen, enthaltend mindestens ein Phosphorsäurediesteramid, Phosphorsäureesterdiamid, Phosphorsäuretriamid, Phosphorigsäurediesteramid, Phosphorigsäureesterdiamid, Phosphorigsäuretriamid, Thiophosphorsäurediesteramid, Thiophosphorsäureesterdiamid oder Thiophosphorsäuretriamid als Wertprodukt mit geringer Wasserlöslichkeit, mittels mindestens eines unpolaren tertiären Amins als Hilfsbase, umfassend die Schritte:
a) Reaktion der Hilfsbase mit der Säure unter Bildung eines Salzes;
b) Umsetzung des in Schritt a) gebildeten Salzes mit einer weiteren Base, welche die Säure unter Freisetzung der Hilfsbase übernimmt und mit der von der Hilfsbase zu übernehmenden Säure ein Salz mit sehr guter Wasserlöslichkeit bildet;
c) Extraktion der in Schritt b) erhaltenen Mischung mit Wasser oder einem wässrigen Medium, wobei sich das Salz der weiteren Base in der wässrigen Phase löst und das Wertprodukt oder die Lösung des Wertproduktes in einem geeigneten Lösungsmittel und die Hilfsbase mindestens eine separate nichtwässrige Phase bilden; und
d) Abdestillieren von zumindest einem Teil des gegebenenfalls vorhandenen Lösungsmittels aus der mindestens einen in Schritt c) erhaltenen nichtwässrigen Phase, wobei zwei nicht mischbare flüssige Phasen gebildet werden.

Eine Phasentrennung tritt bei Gemischen von Flüssigkeiten immer dann auf, wenn sich zwei Komponenten des Gemisches hinreichend in ihrer Polarität unterscheiden, d. h. wenn eine Komponente relativ polar und eine andere Komponente relativ unpolar ist. Ein quantitatives Maß zur Beurteilung, für welche Systeme diese Bedingung erfüllt ist, liefern die jeweiligen Aktivitätskoeffizienten der einen Komponente in unendlicher Verdünnung γ^{∞} in der jeweils anderen. Wie in der Literatur beschrieben (H. R. Null, "Phase Equilibrium in Process Design", Wiley Interscience, 1970), kann eine Phasenseparation nur auftreten, wenn γ^{∞} > 7,39 ist. Somit sollten alle System, bei denen die obige Bedingung erfüllt ist, eine Phasentrennung erlauben und für das beanspruchte Verfahren geeignet sein.

Durch die vorzugsweise wasserfreie Umsetzung der hydrolyse-instabilen Edukte in Gegenwart der Hilfsbase (Base 1) und gegebenenfalls eines Lösungsmittels bildet sich bei vorliegender Erfindung ein homogenes oder heterogenes Gemisch aus Wertprodukt und Salz aus Base 1 und gebildeter oder vorliegender Säure (Base 1•Säure). Die Hilfsbase kann im Reaktionsgemisch enthalten sein oder nachträglich zugesetzt werden. Die Hilfsbase selbst ist vorteilhafterweise bei Temperaturen flüssig, bei denen das Wertprodukt nicht signifikant zersetzt wird.

Zur Trennung dieses Gemischs wird eine weitere Base (Base 2) zugegeben, die die Säure übernimmt. Dadurch wird die unpolare Base 1 wieder freigesetzt. Zudem kann die zugesetzte Base 2 in die Bildung bzw. weitere Transformation des Wertprodukts eingreifen, beispielsweise indem die Base eine nukleophile Reaktion eingeht (z. B. mit Ammoniak Bildung von Phosphoramiden aus Phosphorhalogeniden).

Als Base 2 sind dabei insbesondere Basen geeignet, die stärker als die als Hilfsbase verwendete Base 1 sind. Geeignet als Base 2 sind aber auch solche Basen, die vom pK-Wert her formal schwächere Basen als die eingesetzte Hilfsbase sind, wenn die Protonenübertragung durch sekundäre Effekte, wie das Ausfällen eines Salzes in wasserfreien Systemen, beeinflusst wird. Hier wird die Protonenübertragung durch die freiwerdende Gitterenergie des Salzes als treibende Kraft zur Vollständigkeit getrieben. Dies ist beispielsweise beim Einsatz von Ammoniak als Base 2 unter Bildung von festem Ammoniumchlorid der Fall, da Ammoniak mit einem pK_{B}-Wert von 4,77 eine schwächere Base ist als z. B. Triethylamin (pK_{B} = 3,25). In jedem Fall muss die Base 2 mit der von Base 1 zu übernehmenden Säure ein Salz mit sehr guter Wasserlöslichkeit bilden.

In einer bevorzugten Ausführungsform bildet das in Schritt c) des erfindungsgemäßen Verfahrens erhaltene nichtwässrige Gemisch aus Wertprodukt und Hilfsbase (Base 1) zusammen mit dem gegebenenfalls vorliegenden Lösungsmittel eine homogene Phase. Dies ist beispielsweise der Fall, wenn Wertprodukt und Hilfsbase miteinander mischbar sind (Fall 1). Die Isolierung des Wertprodukts erfolgt in diesem Fall durch Abdestillieren des gegebenenfalls vorliegenden Lösungsmittels.

Doch auch wenn Wertprodukt und Hilfsbase nicht miteinander mischbar sind, kann sich in Gegenwart eines geeigneten Lösungsmittels in Schritt c) des erfindungsgemäßen Verfahrens eine homogene nichtwässrige Phase ausbilden (Fall 2). Die Isolierung des Wertprodukts kann in diesem Fall durch teilweises oder vollständiges Abdestillieren des Lösungsmittels erfolgen, wodurch sich zwei flüssige Phasen bilden, die trennbar sind und von denen eine das Wertprodukt und die andere die Hilfsbase enthält. Alternativ kann auch die Hilfsbase zusammen mit dem Lösungsmittel abdestilliert werden, wobei das Wertprodukt als Rückstand verbleibt.

In einer weiteren bevorzugten Ausführungsform liegt das in Schritt c) des erfindungsgemäßen Verfahrens erhaltene nichtwässrige Gemisch aus Wertprodukt und Hilfsbase (Base 1) zusammen mit dem gegebenenfalls vorliegenden Lösungsmittel zweiphasig vor (Fall 3). Dies tritt beispielsweise dann auf, wenn sowohl das Wertprodukt als auch das verwendete Lösungsmittel relativ polar sind, so dass sie sich nicht mit dem erfindungsgemäß als Hilfsbase verwendeten unpolaren Amin mischen. Wertprodukt und Hilfsbase können hier sofort durch Trennung der Phasen separiert werden, anschließend kann erforderlichenfalls noch das gegebenenfalls vorliegende Lösungsmittel vom Wertprodukt abdestilliert werden. Alternativ kann auch hier die Hilfsbase zusammen mit dem Lösungsmittel abdestilliert werden, wobei das Wertprodukt als Rückstand verbleibt.

In Schritt c) des erfindungsgemäßen Verfahrens wird das Reaktionsgemisch mit Wasser oder einem wässrigen Medium extrahiert, so dass das gut wasserlösliche Salz der weiteren Base (Base 2•Säure) in Lösung geht. Da die Hilfsbase erfindungsgemäß unpolar ist und auch das Wertprodukt nur eine geringe Wasserlöslichkeit aufweist, bildet die wässrige Lösung des Salzes der weiteren Base (Base 2•Säure) eine separate Phase aus, die leicht abgetrennt werden kann. Falls erforderlich kann dem zur Extraktion verwendeten Wasser oder wässrigen Medium zur Verbesserung der Phasentrennung ein inertes Salz zugesetzt werden, beispielsweise ein Alkalimetallhalogenid oder -sulfat, bevorzugt Natriumchlorid. Das Wertprodukt ist unter den Bedingungen hydrolysestabil.

Die Löslichkeit des Wertproduktes in wässriger Lösung von Base 2•Säure beträgt vorteilhafterweise weniger als 10 Gew.%, bevorzugt weniger als 2 Gew.-% und ganz besonders bevorzugt weniger als 0,5 Gew.-%.

Das Wertprodukt, das im oben geschilderten Fall 3 eine separate Phase ausbildet, kann sowohl von der wässrigen Salzlösung als auch von der als weitere separate Phase vorliegenden Base 1 durch Phasentrennung abgetrennt werden. Liegt das Wertprodukt im oben geschilderten Fall 2 in Gegenwart eines Lösungsmittels vor, tritt eine Phasenseparation zwischen Wertprodukt und Base 1 erst nach dem Entfernen von zumindest einem Teil des flüchtigen Lösungsmittels ein.

Die Base 1 wird abgetrennt und vorteilhafterweise in den Prozess zurückgeführt.

Nachfolgende Schemata sollen den prinzipiellen Unterschied im Verfahrensablauf zwischen den oben beschriebenen Fällen 1 und 2 im Vergleich zu Fall 3 verdeutlichen:
Fälle 1, 2) 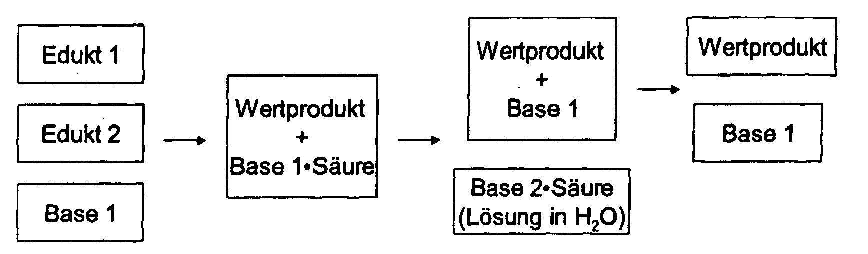
Fall 3)

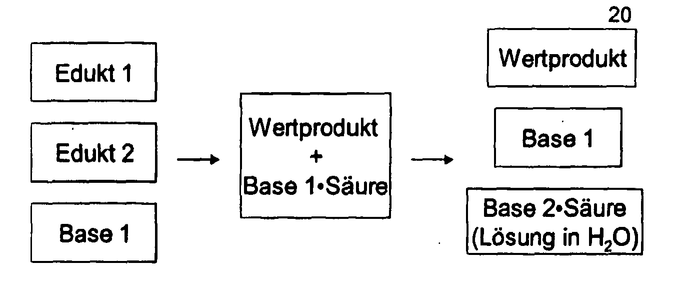

Erläuterungen:

| | |
|---|---|
| Edukt 1 oder 2: | hydrolyseinstabil; |
| Base 1: | unpolares tertiäres Amin (Hilfsbase), wasserunlöslich, wird im Prozess zurückgeführt; |
| Base 1•Säuren: | Salz; |
| Base 2: | polar (z. B. NaOH oder NH₃); |
| Base 2•Säure: | Salz, sehr gut wasserlöslich, wird gelöst. |

Bei dem Wertprodukt handelt es sich in der Regel um polare organische oder anorganische Verbindungen mit geringer Wasserlöslichkeit, die bei nachstehend beispielhaft aufgeführten Reaktionen entstehen.

Das Wertprodukt kann in Lösung in einem geeigneten Lösungsmittel vorliegen. Geeignete Lösungsmittel reagieren nicht selbst mit den Edukten, haben ein gutes Lösevermögen für die Edukte und das Wertprodukt und sind vorzugsweise polar bei gleichzeitig schlechter Wasserlöslichkeit. Ein geeignetes Lösungsmittel ist beispielsweise Essigsäureethylester. Es eignen sich aber auch alle anderen bekannten, vorzugsweise polaren Lösungsmittel mit geringer Wasserlöslichkeit, wie Ester und Ketone. Die Wasserlöslichkeit des Lösungsmittels beträgt vorteilhafterweise weniger als 20 Gew.-%, bevorzugt weniger als 10 Gew.-% und ganz besonders bevorzugt weniger als 5 Gew.-%.

Für die eventuell durchgeführte destillative Abtrennung des Lösungsmittels vom Wertprodukt ist es wichtig, dass sich die Siedepunkte von Lösungsmittel und Wertprodukt hinreichend unterscheiden. In der Regel sollten sich die Siedepunkte von Wertprodukt und Lösungsmittel um mindestens 5°C unterscheiden, besser noch um mindestens 10°C. Vorzugsweise hat das Lösungsmittel einen niedrigeren Siedepunkt als das Wertprodukt.

Als chemische Reaktionen, die mit dem erfindungsgemäßen Verfahren durchgeführt werden können, kommen alle Reaktion in Betracht, bei denen Säuren freigesetzt werden.

Reaktionen, bei denen das erfindungsgemäße Verfahren analog angewendet werden kann, sind beispielsweise
- Alkylierungen mit Alkyl- oder Aralkylhalogeniden, wie z.B. Methylchlorid, Methyliodid, Benzylchlorid, 1,2-Dichlorethan oder 2-Chlorethanol,
- Acylierungen, d.h. Reaktionen von Säurehalogeniden und Carbonsäureanhydriden mit beliebigen Substraten, beispielsweise Alkoholen oder Aminen,
- Silylierungen, also Umsetzungen mit Verbindungen, die mindestens eine Silizium-Halogen-Bindung enthalten, wie z.B. Tetrachlorsilan (SiCl₄), Dimethyldichlorsilan ((H₃C)₂SiCl₂) oder Trimethylchlorsilan ((H₃C)₃SiCl),
- Phosphorylierungen und Thiophosphorylierungen, also Umsetzungen mit Verbindungen, die mindestens eine Phosphor-Halogen-Bindung enthalten, wie z.B. Phosphortrichlorid (PCl₃), Phosphorpentachlorid (PCl₅), Phosphorylchlorid (POCl₃), Thiophosphorylchlorid (PSCl₃), Phosphorylbromid (POBr₃), Dichlorphenylphosphin oder Diphenylchlorphosphin,
- Sulfurierungen, i.e. Sulfidierungen, Sulfierungen, Sulfonierungen und Sulfatierungen, mit beispielsweise Sulfurylchlorid (SO₂Cl₂), Thionylchlorid (SOCl₂), Chlorsulfonsäure (ClSO₃H), Sulfonsäurehalogeniden wie p-Toluolsulfonsäurechlorid, Methansulfonsäurechlorid oder Trifluormethansulfonsäurechlorid, oder Sulfonsäureanhydriden,
- Eliminierungen, bei denen eine C=C-Doppelbindung unter Abspaltung einer Säure, wie beispielsweise Chlorwasserstoff (HCl), Bromwasserstoff (HBr), Essigsäure oder p-Toluolsulfonsäure gebildet wird oder
- Deprotonierungen, bei denen ein acides Wasserstoffatom von der Hilfsbase abstrahiert wird.

Bevorzugt unter den genannten Reaktionstypen sind Phosphorylierungen, Thiophosphorylierungen, Sulfurierungen und Silylierungen und besonders bevorzugt sind Phosphorylierungen und Thiophosphorylierungen.

Die im Sinne dieser Erfindung abzutrennenden Säuren können beispielsweise Brönsted-Säuren sein. Welche Säuren als Brönsted-Säuren bezeichnet werden, wird in Hollemann-Wiberg, Lehrbuch der Anorganischen Chemie, 91.-100. Auflage, Walter de Gruyter, Berlin New York 1985, S. 235 bzw. S. 239 beschrieben.

Umgesetzt im Sinne einer Silylierung, Phosphorylierung, Thiophosphorylierung oder Sulfurierung werden in der Regel Verbindungen, die mindestens eine freie O-H-, S-H- oder N-H-Bindung aufweisen, gegebenenfalls nach Deprotonierung durch die Hilfsbase.

Säuren, mit denen die Basen Salze bilden können, sind beispielsweise Iodwasserstoff (HI), Fluorwasserstoff (HF), Chlorwasserstoff (HCl), Salpetersäure (HNO₃), salpetrige Säure (HNO₂), Bromwasserstoff (HBr), Kohlensäure (H₂CO₃), Hydrogencarbonat (HCO₃⁻), Methylkohlensäure (HO(CO)OCH₃), Ethylkohlensäure (HO(CO)OC₂H₅), n-Butylkohlensäure, Schwefelsäure (H₂SO₄), Hydrogensulfat (HSO₄⁻), Methylschwefelsäure (HO(SO₂)OCH₃), Ethylschwefelsäure (HO(SO₂)OC₂H₅), Phosphorsäure (H₃PO₄), Dihydrogenphosphat (H₂PO₄⁻), Ameisensäure (HCOOH), Essigsäure (CH₃COOH), Propionsäure, n- und iso-Buttersäure, Pivalinsäure, para-Toluolsulfonsäure, Benzolsulfonsäure, Benzoesäure, 2,4,6-Trimethylbenzoesäure, Mandelsäure, Methansulfonsäure, Ethansulfonsäure oder Trifluormethansulfonsäure, bevorzugt sind Chlorwasserstoff, Essigsäure, p-Toluolsulfonsäure, Methansulfonsäure, 2,4,6-Trimethylbenzoesäure und Trifluormethansulfonsäure und besonders bevorzugt ist Chlorwasserstoff.

Die eingesetzten Hilfsbasen sind erfindungsgemäß unpolare tertiäre Amine, insbesondere solche, die keine freie O-H-, S-H- oder N-H-Bindung aufweisen. Bevorzugt sind solche Hilfsbasen, die nicht als Reaktand an der Reaktion teilnehmen.

Geeignete Hilfsbasen sind beispielsweise tertiäre Amine der Formel (I),

NR^{a}R^{b}R^{c} (I),

worin

R^{a}, R^{b} und R^{c} unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl oder C₅ - C₁₂-Cycloalkyl oder einen Rest eines fünf- bis sechsgliedrigen Sauerstoff-, Stickstoff- und/oder Schwefelatome aufweisenden Heterocyclus bedeuten oder zwei von ihnen gemeinsam zusammen mit dem sie verbindenden Stickstoffatom einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen 5 - 7 gliedrigen Ring bilden, wobei die genannten Reste jeweils noch durch weitere Aryl-, Alkyl-, Aryloxy-, Alkyloxygruppen, Halogenatome und/oder Reste von Heterocyclen substituiert sein können und noch weitere Heteroatome und/oder funktionelle Gruppen enthalten können. Dabei steht der Begriff Arylgruppe für einen aromatischen Kohlenwasserstoffrest mit 6 bis 12 C-Atomen, Alkylgruppe für einen verzweigten oder unverzweigten gesättigten Kohlenwasserstoffrest mit 1 bis 18 C-Atomen, Aryloxygruppe für einen Rest, der sich von einem aromatischen Phenol mit 6 bis 12 C-Atomen ableitet, Alkyloxygruppe für einen Rest, der sich von einem aliphatischen Monoalkohol mit 1 bis 18 C-Atomen ableitet, und Halogen für die Elemente Fluor, Chlor, Brom und Jod. Heterocyclen sind Pyrrolidin, Piperidin, Morpholin, Furan, Thiophen, Pyrrol, Imidazol, Pyrazol, Oxazol, Isoxazol, Thiazol, Iso-thiazol, Oxadiazol, Thiadiazol, Triazol, Chinolin, Isochinolin, Pyridin, Pyrimidin, Pyrazin, Pyridazin oder s-Triazin. Weitere Heteroatome sind Stickstoff, Sauerstoff, Schwefel oder Phosphor und funktionelle Gruppen sind Carbonyl-, Carboxyl-, Ester-, Cyano- oder Nitrogruppen.

Bevorzugt sind R^{a}, R^{b} und R^{c} unabhängig voneinander jeweils C₁ - C₁₈-Alkyl, C₈ - C₁₂-Aryl oder C₅ - C₁₂-Cycloalkyl und besonders bevorzugt C₁ - C₁₈-Alkyl, wobei die genannten Reste jeweils noch durch weitere Aryl-, Alkyl-, Aryloxy-, Alkyloxygruppen, Halogenatome und/oder Reste von Heterocyclen substituiert sein können und noch weitere Heteroatome und/oder funktionelle Gruppen enthalten können.

Bevorzugte Bedeutungen für die Reste R^{a}, R^{b} und R^{c} sind Methyl, Ethyl, n-Propyl, Isopropyl, n-Butyl, sec-Butyl, tert.-Butyl, n-Pentyl (n-Amyl), 2-Pentyl (sek-Amyl), 3-Pentyl, 2,2-Dimethyl-prop-1-yl (neo-Pentyl), n-Hexyl, n-Heptyl, n-Octyl, iso-Octyl, 2-Etylhexyl, 1,1-Dimethylpropyl, 1,1-Dimethylbutyl, Benzyl, 1-Phenylethyl, 2-Phenylethyl, α,α -Dimethylbenzyl, Phenyl, Tolyl, Xylyl, α-Naphthyl, β-Naphthyl, Cyclopentyl oder Cyclohexyl.

Bilden zwei der Reste R^{a}, R^{b} und R^{c} eine Kette, so kann dies beispielsweise 1,4-Butylen oder 1,5-Pentylen sein, wobei sie zusammen mit dem sie verbindenden Stickstoffatom einen Pyrrolidin- bzw. Piperidinrest bilden.

Beispiele für die tertiären Amine sind Trimethylamin, Triethylamin, Diethyl-methylamin, Diethyl-n-propylamin, Diethyl-n-butylamin, Diethyl-tert-butylamin, Diethyl-n-pentylamin, Diethyl-hexylamin, Diethyl-octylamin, Diethyl-(2-ethylhexyl)-amin, Tri-n-propylamin, Di-n-propyl-methylamin,Di-n-propyl-ethylamin, Di-n-propyl-butylamin, Di-n-propyl-n-pentylamin, Di-n-propyl-hexylamin, Di-n-propyl-octylamin, Di-n-propyl-(2-ethylhexyl)-amin, Di-iso-propyl-methylamin, Di-iso-propyl-ethylamin, Di-iso-propyl-n-propylamin, Di-iso-propyl-butylamin, Di-iso-propyl-pentylamin, Di-iso-propyl-hexylamin, Di-iso-propyl-octylamin, Di-iso-propyl-(2-ethylhexyl)-amin,, Tri-n-butylamin, Di-n-butyl-methylamin, Di-n-butyl-ethylamin, Di-n-butyl-n-propylamin, Di-n-butyl-n-pentylamin, Din-butyl-hexylamin, Di-n-butyl-octylamin, Di-n-butyl-(2-ethylhexyl)-amin, N-methylpyrrolidin, N-ethyl-pyrrolidin, N-n-Propyl-pyrrolidin, N-iso-Propyl-pyrrolidin N-n-Butyl-pyrrolidin, N-sek-Butyl-pyrrolidin, N-tert-Butyl-pyrrolidin, N-n-Pentyl-pyrrolidin, N,N-Dimethylcyclohexylamin, N,N-Diethylcyclohexylamin, N,N-Di-n-butylcyclohexylamin, N-Methyl-piperidin, N-Ethyl-piperidin, N-n-Propyl-piperidin, N-iso-Propyl-piperidin, N-n-Butyl-piperidin, N-sek-Butyl-piperidin, N-tert-Butyl-piperidin, N-n-Pentyl-piperidin, N-Methylmorpholin, N-Ethylmorpholin, N-n-Propylmorpholin, N-iso-Propylmorpholin, N-n-Butylmorpholin, N-sek-Butylmorpholin, N-tert-Butylmorpholin, N-n-Pentylmorpholin, N-Benzyl-N-methyl-anilin, N-Benzyl-N-ethyl-anilin, N-Benzyl-N-n-propyl-anilin, N-Benzyl-N-iso-propyl-anilin, N-Benzyl-N-n-butyl-anilin, N,N-Dimethyl-p-toluidin, N,N-Diethyl-p-toluidin, N,N-Di-n-butyl-p-toluidin, Dimethylbenzylamin, Diethylbenzylamin, Di-n-propylbenzylamin, Di-n-butylbenzylamin, Dimethylphenylamin, Diethylphenylamin, Din-propylphenylamin und Di-n-butylphenylamin.

Vorzugsweise sind die Hilfsbasen Trialkylamine.

Bevorzugt sind Trimethylamin, Triethylamin, Diethyl-methylamin, Diethyl-n-propylamin, Diethyl-n-butylamin, Tri-n-propylamin, Di-n-propyl-methylamin,Di-n-propyl-ethylamin, Tri-n-butylamin, Di-n-butyl-methylamin, Di-n-butyl-ethylamin.

Besonders bevorzugte tertiäre Amine sind Triethylamin, Tri-n-propylamin und Tri-n-butylamin.

Die genannten Hilfsbasen können einzeln oder in Gemischen untereinander eingesetzt werden, um die erfindungsgemäße Aufgabenstellung zu erfüllen.

Die Hilfsbase ist vorteilhafterweise bei Temperaturen flüssig, bei denen das Wertprodukt nicht signifikant zersetzt wird.

Keine signifikante Zersetzung des Wertproduktes im Sinne dieser Erfindung bedeutet, dass weniger als 10 Mol-% pro Stunde, bevorzugt weniger als 5 Mol-%/h, besonders bevorzugt weniger als 2 Mol-%/h und ganz besonders bevorzugt weniger als 1 Mol-%/h Wertprodukt zersetzt werden.

Die Schmelzpunkte der besonders bevorzugten Hilfsbasen liegen in der Regel unterhalb von 50°C, besonders bevorzugt unterhalb von 25°C und ganz besonders bevorzugt unterhalb von 10°C.

Für die eventuell durchgeführte destillative Abtrennung der Hilfsbase vom Wertprodukt ist es wichtig, dass sich die Siedepunkte von Hilfsbase und Wertprodukt hinreichend unterscheiden. In der Regel sollten sich die Siedepunkte von Wertprodukt und Hilfsbase um mindestens 5°C unterscheiden, besser noch um mindestens 10°C. Vorzugsweise hat die Hilfsbase einen niedrigeren Siedepunkt als das Wertprodukt.

Erfindungsgemäß sind die eingesetzten Hilfsbasen unpolar und haben somit bei Raumtemperatur eine geringe Wasserlöslichkeit von weniger als 10 Gew.-%, bevorzugt von weniger als 2 Gew.-% und ganz besonders bevorzugt von weniger als 0,5 Gew.-%.

Die Hilfsbase sollte so gewählt werden, dass sie weder in Form des Salzes noch in Form der freien Base (nach Zusatz von Base 2) zersetzend auf das Wertprodukt wirkt.

Zur Übernahme der Säure aus dem Salz Base 1•Säure wird erfindungsgemäß eine weitere Base (Base 2) eingesetzt.

Solche Basen können beliebige Gruppen enthalten, wie z. B. OH-, NH₂- oder Alkoholat-Gruppen. Wie bereits weiter oben ausgeführt, können sie stärkere Basen als die Base 1 sein. Sind sie dagegen schwächere Basen als Base 1, wie Ammoniak relativ zu tertiären Aminen, muss die Reaktion der Base 2 mit dem Salz der Base 1 zum Salz der Base 2 unter Freisetzung von Base 1 eine deutlich negative Reaktionsenthalpie aufweisen.

Die zugesetzten weiteren Basen (Base 2) sind beispielsweise Ammoniak, anorganische Hydroxide, Alkoholate, anorganische Amide, anorganische Carbonate, organische Amidinbasen, wie 1,8-Diazabicyclo[5.4.0]undec-7-en (DBU) und 1,5-Diaza-bicyclo[4.3.0]non-5-en (DBN), oder gut wasserlösliche polare Amine, wie z. B. Oligoethylenimine (Polymin^{®}, BASF Aktiengesellschaft).

Bevorzugt eingesetzt werden Natriumhydroxid (NaOH), Kaliumhydroxid (KOH), Calciumhydroxid (Ca(OH)₂), Kalkmilch, Natriumcarbonat (Na₂CO₃), Natriumhydrogencarbonat (NaHCO₃), Kaliumcarbonat (K₂CO₃), Ammoniak (NH₃) und Natriummethanolat. Besonders bevorzugt eingesetzt werden Natriumhydroxid und Ammoniak.

Dabei ist es erfindungsgemäß nicht möglich, die Base 2 von vom herein dem Reaktionsgemisch zuzusetzen, da diese mit den Edukten reagieren würde.

Zur Überführung des Salzes Base 2•Säure in eine wässrige Lösung wird Wasser oder ein wässriges Medium eingesetzt. Das wässrige Medium kann jede Art von wässriger Mischung sein, in welchem Wasser in einer Menge von mehr als 1 Gew.-% vorhanden ist, bevorzugt mehr als 50 Gew.-%, besonders bevorzugt mehr als 90 Gew.-%.

In einer weiteren Ausführungsform der Erfindung wird die Base 2 in Schritt b) des erfindungsgemäßen Verfahrens bereits als wässrige Lösung zugegeben.

Die für das erfindungsgemäße Verfahren eingesetzten Verbindungen werden vorteilhafterweise in folgenden Mengenverhältnissen eingesetzt:

Die Hilfsbase (Base 1) wird z. B. in einer Menge von 0,5 bis 3 mol-Äquivalente, vorzugsweise 0,8 bis 1,5 mol-Äquivalente, jeweils bezogen auf das Edukt, welches in geringerer Molmenge vorliegt, verwendet.

Die weitere Base (Base 2) wird z. B. in einer Menge von 0,5 bis 10 mol-Äquivalente, vorzugsweise 1,0 bis 3 mol-Äquivalente, jeweils bezogen auf das Edukt, welches in geringerer Molmenge vorliegt, verwendet.

Wasser sollte in einer Menge von 50 bis 5000 Gew.-%, vorzugsweise 100 bis 1000 Gew.-%, jeweils bezogen auf das Salz der weiteren Base, zum Einsatz kommen.

Die Durchführung der Reaktion ist nicht beschränkt und kann erfindungsgemäß unter Abfangen der freigesetzten oder zugesetzten Säuren diskontinuierlich oder kontinuierlich und an Luft oder unter einer Schutzgasatmosphäre durchgeführt werden.

Die Reaktion zwischen den Edukten in Gegenwart der Hilfsbase verläuft üblicherweise bei Temperaturen von -70°C bis +150°C, bevorzugt von -30°C bis +50°C. Die Umsetzung mit der weiteren Base (Base 2) verläuft üblicherweise ebenfalls bei Temperaturen von -70°C bis +150°C, bevorzugt von -30°C bis +50°C. Die Extraktion des Salzes Base 2•Säure mit Wasser oder einem wässrigen Medium erfolgt unter Auflösen des Salzes vorzugsweise bei Temperaturen von -10°C bis +100°C, besonders bevorzugt von -5°C bis +50°C. Die beiden separierten nichtwässrigen Flüssigphasen in den oben beschriebenen Fällen 2 und 3, einerseits Hilfsbase und andererseits Wertprodukt, bilden sich oberhalb des Schmelzpunktes des Wertprodukts aus. Bevorzugt liegt der Temperaturbereich für die Phasentrennung zwischen 0°C und 150°C, besonders bevorzugt zwischen 15°C und 100°C.

Alle Verfahrensschritte können drucklos, unter Druck oder auch bei vermindertem Druck stattfinden. Bevorzugt liegt der Druck bei Anwesenheit von gasförmigen Reaktanden oder gasförmigen Basen bei kleiner 50 bar.

Die aus dem Prozess abgetrennte Hilfsbase kann nach dem Fachmann bekannter Art und Weise wieder in das Verfahren zurückgeführt werden.

Falls erforderlich kann die Hilfsbase mit Wasser oder wässriger Natriumchlorid- oder Natriumsulfat-Lösung gewaschen und anschließend getrocknet werden, z. B. durch Abtrennung von gegebenenfalls enthaltenem Wasser mit Hilfe einer Azeotropdestillation mit Benzol, Toluol, Xylol, Butanol oder Cyclohexan.

Falls erforderlich, kann die Hilfsbase vor erneuter Verwendung destilliert werden.

Durch das erfindungsgemäße Verfahren gelingt es, eine Abtrennung von Säuren aus chemischen Reaktionsgemischen mit Wertprodukten mit geringer Wasserlöslichkeit durchzuführen. Das Salz der unpolaren Hilfsbase (Base 1) wird durch Reaktion mit einer weiteren Base (Base 2) unter Freisetzung der Hilfsbase zum Salz der Base 2 umgesetzt, welches eine wesentlich bessere Wasserlöslichkeit aufweist als das Salz der unpolaren Hilfsbase. Da das Wertprodukt auch nur eine geringe Wasserlöslichkeit aufweist, kann das Salz der Base 2 durch eine verfahrenstechnisch einfache flüssig-flüssig-Phasentrennung nach Extraktion mit Wasser oder einem wässrigen Medium abgetrennt werden. Dadurch entfällt der verfahrenstechnisch aufwändige Umgang mit Feststoffen. Die Aufarbeitung der Hilfsstoffe kann in Abwesenheit des Wertproduktes erfolgen, so dass letzteres weniger belastet wird.

Das erfindungsgemäße Verfahren kann bei allen weiter oben beschriebenen Reaktionen erfolgreich eingesetzt werden, insbesondere bei der Herstellung von (Thio)-Phosphorsäurederivaten, wie -amiden, -estern und gemischten Spezies.

Thiophosphorsäuretriamide werden bekanntermaßen relativ leicht zu den entsprechenden Phosphorsäuretriamiden hydrolysiert. In Anwesenheit von Feuchtigkeit liegen Thiophosphorsäuretriamide und ihre korrespondierenden Phosphorsäuretriamide in der Regel im Gemisch miteinander vor. Der Begriff "Thiophosphorsäuretriamid" bezeichnet daher im Rahmen dieser Erfindung sowohl die reinen Thiophosphorsäuretriamide als auch deren Gemische mit den entsprechenden Phosphorsäuretriamiden.

Die Herstellung von Thiophosphorsäuretriamiden erfolgt erfindungsgemäß durch Umsetzung von Thiophosphorylchlorid mit mindestens einem primären oder sekundären Amin in einem inerten Lösungsmittel unter Zuhilfenahme mindestens eines unpolaren tertiären Amins als Hilfsbase, umfassend die Schritte:
a) Reaktion der Hilfsbase mit dem im Verlauf der Umsetzung entstehenden Chlorwasserstoff unter Bildung eines Chloridsalzes;
b) Umsetzung des in Schritt a) gebildeten Chloridsalzes mit Ammoniak, welches den Chlorwasserstoff unter Freisetzung der Hilfsbase übernimmt:
c) Extraktion der in Schritt b) erhaltenen Mischung mit Wasser oder einem wässrigen Medium, wobei sich das gebildete Ammoniumchlorid in der wässrigen Phase löst und die Lösung des Wertproduktes in dem inerten Lösungsmittel und die Hilfsbase mindestens eine separate nichtwässrige Phase bilden; und
d) Abdestillieren von zumindest einem Teil des inerten Lösungsmittels aus der mindestens einen in Schritt c) erhaltenen nichtwässrigen Phase, wobei zwei nicht mischbare flüssige Phasen gebildet werden.

Für die Umsetzung des Thiophosphorylchlorids wird mindestens ein primäres oder sekundäres Amin eingesetzt.

Vorteilhafterweise sind dies Verbindungen gemäß der allgemeinen Formel (II)

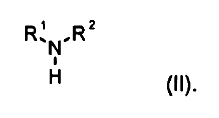

Dabei bedeuten R¹ und R² unabhängig voneinander Wasserstoff, Alkyl, Alkenyl, Cycloalkyl, Aryl oder Hetaryl.

Die Alkylreste weisen vorzugsweise 1 bis 20 C-Atome, besonders bevorzugt 3 bis 5 C-Atome, die Alkenylreste vorzugsweise 2 bis 20 C-Atome, besonders bevorzugt 3 bis 6 C-Atome, die Cycloalkylreste vorzugsweise 3 bis 20 C-Atome, besonders bevorzugt 5 bis 7 C-Atome, und die Arylreste vorzugsweise 6 bis10 C-Atome auf. Hierbei steht Aryl vorteilhafterweise für Phenyl oder Naphthyl.

Hetaryl steht für einen Rest der sich beispielsweise ableitet von Furan, Thiophen, Pyrrol, Imidazol, Pyrazol, Oxazol, Isoxazol, Thiazol, Isothiazol, Oxadiazol, Thiadiazol, Triazol, Chinolin, Isochinolin, Pyridin, Pyrimidin, Pyrazin, Pyridazin oder s-Triazin. Besonders bevorzugte Hetaryl-Reste leiten sich ab von Furan, Thiophen und Imidazol.

In einer vorteilhaften Ausführungsform bilden die beiden Reste der Aminogruppe zusammen eine Alkylen- bzw. Alkenylen-Kette, die zusammen mit dem sie verbindenden Stickstoffatom ein 3 bis 6-gliedriges, vorzugsweise 5-gliedriges, Ringsystem bildet, welches gegebenenfalls noch ein oder mehrere weitere Heteroatome, ausgewählt aus der Gruppe, bestehend aus Sauerstoff, Stickstoff und Schwefel, enthält.

Die Substituenten R¹ und R² können zusätzlich noch einen oder mehrere Reste, wie beispielsweise Halogen, Cyano, C₁- bis C₆-Alkylthio, C₁-bis C₆-Alkoxy, C₆-bis C₁₂-Aryl, C₁-bis C₆-(Di)alkylamino, C₁-bis C₆-Alkoxycarbonyl, Aryloxycarbonyl, Carbamoyl, Hydroxy, Amino, Sulfo oder Nitro, aufweisen. Besonders bevorzugt enthalten die Substituenten R¹ und R² Halogen- oder Aminogruppen.

Vorzugsweise kommen Alkylamine, besonders bevorzugt n-Butylamin und/oder n-Propylamin zum Einsatz.

Die primären oder sekundären Amine können einzeln oder im Gemisch untereinander verwendet werden, beispielsweise ein Gemisch aus zwei oder mehreren Alkylaminen, ein Gemisch aus zwei oder mehreren Arylaminen oder ein Gemisch aus jeweils einem oder mehreren Alkyl- und Arylaminen. Ein vorteilhaftes Gemisch ist n-Butylamin und n-Propylamin mit Anteilen von n-Butylamin von 40 bis 99 Gew.-%. Bevorzugt ist ein Anteil an n-Butylamin von 60 bis 80 Gew.-%, besonders bevorzugt von 72 bis 78 Gew.-%.

Die Amine werden vorzugsweise in einem Molverhältnis von 0,9 bis 1,1 mol pro mol Thiophosphorylchlorid, besonders bevorzugt von 0,95 bis 1,05 mol Amin pro mol Thiophosphorylchlorid, verwendet. In einer vorteilhaften Ausführungsform wird in etwa pro mol Thiophosphorylchlorid 1 mol Amin eingesetzt.

Die Umsetzung des Thiophosphorylchlorids erfolgt erfindungsgemäß in einem inerten polaren Lösungsmittel.

Als Lösungsmittel können erfindungsgemäß alle bekannten inerten polaren Lösungsmittel zur Anwendung kommen. Verwendbar sind beispielsweise Aceton, Methylethylketon, Isobutylmethylketon, Diethylketon, Diethylether, Di-n-butylether, tert.-Butylmethylether, tert.-Butylethylether, Tetrahydrofuran, Dioxan, Essigester wie Essigsäureethylester, Essigsäuremethylester, Essigsäurepropylester, Essigsäurebutylester oder 2-Ethylhexylacetat, Dimethylformamid, Dimethylsulfoxid, Acetonitril, Diethylphthalat, Dioctyladipat, Chloroform, Dichlormethan, Methylchloroform oder Gemische davon. Vorzugsweise wird Essigsäureethylester eingesetzt.

Die inerten polaren Lösungsmittel können allein oder im Gemisch von zwei oder mehreren davon eingesetzt werden.

Vorzugsweise werden nach dem erfindungsgemäßen Verfahren N-Alkylthiophosphorsäuretriamide, beispielsweise N-n-Butylthiophosphorsäuretriamid oder N-n-Propylthiophosphorsäuretriamid, hergestellt.

Dazu werden Thiophosphorylchlorid und ein primäres Alkylamin, beispielsweise n-Butylamin, in Molverhältnissen von vorzugsweise 0,9 bis 1,1 mol Amin pro mol Thiophosphorylchlorid in einem inerten Lösungsmittel, beispielsweise Essigsäureethylester, umgesetzt. Als Hilfsbase fungiert ein Trialkylamin, beispielsweise Tri-n-butylamin, welches zum Tri-n-butylamin-Hydrochlorid umgesetzt wird. In einem zweiten Reaktionsschritt wird das in der ersten Reaktion gebildete N-Alkylthiophosphoryldichlorid mit Ammoniak zum gewünschten Produkt N-Alkylthiophosphorsäuretriamid bei Temperaturen zwischen vorzugsweise -20°C und 50°C zur Reaktion gebracht. Parallel und unabhängig zu dem zweiten Reaktionsschritt fungiert Ammoniak als Base 2 und übernimmt den Chlorwasserstoff vom Trialkylamin-Hydrochlorid unter Bildung von Ammoniumch-Iorid.

Ammoniak wird vorzugsweise in einem Molverhältnis von 2 bis 15 mol pro mol Thiophosphorylchlorid, besonders bevorzugt von 2,1 bis 10 und besonders bevorzugt von 2,2 bis 7 mol Ammoniak pro mol Thiophosphorylchlord, verwendet. In einer vorteilhaften Ausführungsform werden in etwa pro mol Thiophosphorylchlorid 4 bis 6 mol Ammoniak eingesetzt.

Durch Extraktion der Reaktionsmischung mit hinreichenden Mengen Wasser in Schritt c) des erfindungsgemäßen Verfahrens entsteht eine wässrige Lösung von Ammoniumchlorid und eine organische Phase umfassend das inerte Lösungsmittel, Trialkylamin und N-Alkylthiophosphorsäuretriamid. Die zur Extraktion eingesetzte Wassermenge liegt in der Regel im Bereich von etwa 10 bis etwa 100 mol Wasser pro mol N-Alkylthiophosphorsäuretriamid, bevorzugt im Bereich von 15 bis 50 mol Wasser pro mol N-Alkylthiophosphorsäuretriamid.

Die Extraktion kann ein- oder mehrstufig erfolgen und sowohl kontinuierlich als auch diskontinuierlich durchgeführt werden. Vorzugsweise wird eine mehrstufige Extraktion durchgeführt, beispielsweise in einer dem Fachmann bekannten Mixer-Settler-Anordnung aus Dispergierstufen und Phasenscheidern oder einer pulsiert gerührten Extraktionskolonne. Die Anzahl der theoretischen Trennstufen sollte 1 bis 10, vorzugsweise 3 bis 5 betragen. Um möglichst wenig Wertprodukt zu verlieren ist es vorteilhaft, die wässrige Phase aus der Extraktion mit dem Lösungsmittel Essigsäureethylester im gleichen Apparat einer Rückextraktion zu unterwerfen. Einen Teil des zur Extraktion verwendeten Wassers kann man vorteilhaft schon vor dem eigentlichen Extraktionsapparat in einem separaten Reaktor oder einem Mischorgan zur Reaktionsmischung geben, um dem Auflösen des Ammoniumchlorids in der wässrigen Phase ausreichend Zeit einzuräumen.

Nach destillativer Entfernung des inerten Lösungsmittels entsteht ein zweiphasiges flüssig-flüssig-Gemisch (Fall 2, s. o.) aus einer Trialkylamin- und einer N-Alkylthiophosphorsäuretriamid-Phase in einem Temperaturfenster zwischen 15°C und 100°C. Die beiden Phasen können leicht voneinander getrennt werden.

Alternativ kann auch das Trialkylamin zusammen mit dem inerten Lösungsmittel fast vollständig verdampft werden, wobei das Wertprodukt N-Alkylthiophosphorsäuretriamid als Rückstand verbleibt. Diese Verdampfung kann man beispielsweise mit einem Dünnschicht-, Mehrphasenwendelrohr-, Kletterfilm- oder Kurzwegverdampfer mit kurzer Verweilzeit direkt nach der Extraktion durchführen, wobei die thermische Belastung des Wertprodukts minimiert wird. Falls eine länger Verweilzeit in Kauf genommen werden kann, lassen sich auch Fallfilm- oder Langrohrverdampfer einsetzen. In einer bevorzugten Ausführungsform wird eine zweistufige Eindampfung in einem Dünnschichtverdampfer mit einer gesamten Verweilzeit in beiden Stufen von weniger als 2 Minuten durchgeführt. Der Druck in der ersten Dünnschichtverdampferstufe beträgt 50 bis 150 mbar, bevorzugt 60 bis 90 mbar. Die Temperatur in der ersten Dünnschichtverdampferstufe beträgt 80 bis 150°C, bevorzugt 100 bis 130°C. Der Druck der zweiten Verdampferstufe beträgt 0,1 bis 20 mbar, bevorzugt weniger als 2 mbar, die Temperatur 80 bis 140°C, bevorzugt 90 bis 100°C. Da das Ammoniumchlorid erfindungsgemäß vorher extrahiert wurde, treten bei dieser Verdampfung keinerlei Ausfällungen oder Feststoffbildungen auf, die das Betreiben des Apparates erschweren würden.

Die bei der Verdampfung entstehenden Brüden können kondensiert und anschließend weiter in einer Lösungsmittelkolonne, beispielsweise einer Trennwandkolonne, aufgearbeitet und in den Prozess zurückgeführt werden.

Die nach dem erfindungsgemäßen Verfahren erhältlichen Thiophosphorsäuretriamide weisen vorzugsweise einen niedrigen Restgehalt an Ammoniumchlorid auf. In einer besonders bevorzugten Ausführungsform der Erfindung weisen die nach dem erfindungsgemäßen Verfahren erhältlichen Thiophosphorsäuretriamide einen Gehalt an Ammoniumchlorid von < 500 ppm (w/w), ganz besonders bevorzugt von < 100 ppm (w/w), jeweils bezogen auf das Thiophosphorsäuretriamid, auf.

In einer weiteren bevorzugten Ausführungsform der Erfindung weisen die nach dem erfindungsgemäßen Verfahren erhältlichen Thiophosphorsäuretriamide einen Restgehalt an inertem Lösungsmittel und Hilfsbase von zusammen < 1 Gew.-%, besonders bevorzugt von < 0,5 Gew.-%, jeweils bezogen auf das Thiophosphorsäuretriamid, auf.

Thiophosphorsäuretriamide, speziell N-n-Butylthiophosphorsäuretriamid (NBPT) oder N-n-Propylthiophosphorsäuretriamid, sind wirksame Urease-Inhibitoren, die in harnstoffbasierten Düngemittelzusammensetzungen Anwendung finden. Durch solche Urease-Hemmer kann die Effizienz der Hamstoffdüngung verbessert werden, da Verluste durch den Urease-katalysierten Abbau von Harnstoff im Boden verringert werden. (Trenkel, M.E., "Controlled-Release and Stabilized Fertilizers in Agriculture", IFA 1997, ISBN: 2-9506299-0-3).

Die folgenden Beispiele sollen die Erfindung weiter erläutern.

### Beispiele

### Beispiel 1: Herstellung von N-n-Butylthiophosphorsäuretriamid (NBPT) nach Fall 2

423,5 g (2,5 mol) Thiophosphorylchlorid und 937,5 g Essigester wurden vorgelegt. Zu dieser Mischung wurden bei maximal 30°C eine Mischung aus 193,7 g (2,65 mol) n-Butylamin, 440,2 g (2,375 mol) Tributylamin und 316,6 g Essigester tropfenweise zugegeben. Die Temperatur wurde durch Kühlung bei 30°C gehalten. Es entstand eine klare Lösung. Die Mischung wurde 3 h bei Raumtemperatur nachgerührt.

Danach wurde Ammoniak bei 0°C solange eingeleitet, bis ein Durchschlagen erkennbar war. Die Ammoniakaufnahme betrug 5 bis 6 mol-Äquivalente. Man erhielt eine dünnflüssige Suspension von ausgefallenem Ammoniumchlorid und N-n-Butylthiophosphorsäuretriamid als Wertprodukt, gelöst in Essigester. Die Mischung wurde auf Raumtemperatur erwärmt. Man gab 1406 g Wasser zu und rührte bei Raumtemperatur nach. Dabei ging das Ammoniumchlorid vollständig in Lösung.

Die beiden erhaltenen klaren Phasen wurden getrennt und die organische Phase eingeengt. Nach weitest gehender Entfernung des Essigesters bildete sich bei ca. 60°C eine Oberphase aus Tributylamin und eine Unterphase aus flüssigem NBPT aus. Die Phasen wurden getrennt und man erhielt eine Schmelze von NBPT, welche bei 50°C mit 1200 g 50°C-warmem Wasser versetzt wurde. Unter Rühren wurde das Gemisch abgekühlt, wobei sich das NBPT als Feststoff abschied. Der Feststoff wurde abfiltriert und getrocknet.

Man erhielt 364,8 g Produkt mit einem Gehalt von 76 Gew.-% NBPT (66 % Ausbeute).

Beispiel 2: Herstellung von N-n-Butylthiophosphorsäuretriamid (NBPT) nach Fall 3

In einer Reaktionsmischpumpe wurde ein Strom aus 68 ml/h Thiophosphorylchlorid mit einem Strom von 876 ml/h eines Gemischs aus n-Butylamin und Tri-n-butylamin (0,079 : 1 gew:gew) mit einer Verweilzeit von 13 s unter Kühlung mit Eiswasser zusammengebracht. Der Ablauf der Pumpe wurde für 1 h in einem Reaktor mit vorgelegtem Tributylamin (ca. 10 : 1 vol Feed:vol Bu₃N) bei kontinuierlicher Begasung mit Ammoniak im Überschuss bei 0°C geleitet. Die resultierende milchig-weiße Suspension wurde mit 306 g Wasser versetzt und auf 40°C aufgeheizt. Es bildete sich ein dreiphasiges System aus wässriger Unterphase, mittlerer Wertproduktphase und oberer Tributylaminphase.

## Patentansprüche

1. Verfahren zur Abtrennung von Säuren aus Reaktionsgemischen, enthaltend mindestens ein Phosphorsäurediesteramid, Phosphorsäureesterdiamid, Phosphorsäuretriamid, Phosphorigsäurediesteramid, Phosphorigsäureesterdiamid, Phosphorigsäuretriamid, Thiophosphorsäurediesteramid, Thiophosphorsäureesterdiamid oder Thiophosphorsäuretriamid als Wertprodukt mit geringer Wasserlöslichkeit, mittels mindestens eines unpolaren tertiären Amins als Hilfsbase, umfassend die Schritte:
a) Reaktion der Hilfsbase mit der Säure unter Bildung eines Salzes;
b) Umsetzung des in Schritt a) gebildeten Salzes mit einer weiteren Base, welche die Säure unter Freisetzung der Hilfsbase übernimmt und mit der von der Hilfsbase zu übernehmenden Säure ein Salz mit sehr guter Wasserlöslichkeit bildet;
c) Extraktion der in Schritt b) erhaltenen Mischung mit Wasser oder einem wässrigen Medium, wobei sich das Salz der weiteren Base in der wässrigen Phase löst und das Wertprodukt oder die Lösung des Wertproduktes in einem geeigneten Lösungsmittel und die Hilfsbase mindestens eine separate nichtwässrige Phase bilden; und
d) Abdestillieren von zumindest einem Teil des gegebenenfalls vorhandenen Lösungsmittels aus der mindestens einen in Schritt c) erhaltenen nichtwässrigen Phase, wobei zwei nicht mischbare flüssige Phasen gebildet werden.

2. Verfahren nach Anspruch 1, **dadurch gekennzeichnet, dass** die Hilfsbase abgetrennt und in den Prozess zurückgeführt wird.

3. Verfahren nach einem der Ansprüche 1 oder 2, **dadurch gekennzeichnet, dass** die Hilfsbase Triethylamin, Tri-n-propylamin oder Tri-n-butylamin ist.

4. Verfahren nach einem der Ansprüche 1 bis 3, **dadurch gekennzeichnet, dass** die Säure im Reaktionsverlauf einer Phosphorylierung oder Thiophosphorylierung freigesetzt wird.

## Claims

1. A process for the removal of acids from reaction mixtures, comprising at least one phosphoric diester amide, phosphoric ester diamide, phosphoric triamide, phosphorous diester amide, phosphorous ester diamide, phosphorous triamide, thiophosphoric diester amide, thiophosphoric ester diamide or thiophosphoric triamide as product of value which is sparingly soluble in water, by means of at least one unpolar tertiary amine as auxiliary base, comprising the following steps:
a) reacting the auxiliary base with the acid with formation of a salt;
b) reacting the salt formed in step a) with a further base which accepts the acid with liberation of the auxiliary base and combines with the acid to be accepted from the auxiliary base to form a salt which is very readily soluble in water;
c) extraction of the mixture obtained in step b) with water or an aqueous medium, where the salt of the further base dissolves in the aqueous phase and the product of value, or the solution of the product of value, in a suitable solvent and the auxiliary base form at least one separate nonaqueous phase; and
d) removal by distillation of at least part of any solvent present from the at least one nonaqueous phase obtained in step c), to form two nonmiscible liquid phases.

2. The process according to claim 1, wherein the auxiliary base is separated off and recirculated into the process.

3. The process according to either of claims 1 and 2, wherein the auxiliary base is triethylamine, tri-n-propylamine or tri-n-butylamine.

4. The process according to any of claims 1 to 3, wherein the acid is liberated during the course of a phosphorylation or thiophosphorylation reaction.

## Revendications

1. Procédé pour la séparation d'acides de mélanges réactionnels, contenant au moins un diester-amide de l'acide phosphorique, un ester-diamide de l'acide phosphorique, un triamide de l'acide phosphorique, un diester-amide de l'acide phosphoreux, un ester-diamide de l'acide phosphoreux, un triamide de l'acide phosphoreux, un diester-amide de l'acide thiophosphorique, un ester-diamide de l'acide thiophosphorique ou un triamide de l'acide thiophosphorique comme produit valorisable, présentant une faible solubilité dans l'eau, au moyen d'au moins une amine tertiaire non polaire comme base auxiliaire, comprenant les étampes :
a) réaction de la base auxiliaire avec l'acide avec formation d'un sel ;
b) transformation du sel formé dans l'étape a) avec une autre base, qui reprend l'acide avec libération de la base auxiliaire et qui forme, avec l'acide à reprendre de la base auxiliaire, un sel avec une très bonne solubilité dans l'eau ;
c) extraction du mélange obtenu dans l'étape b) avec de l'eau ou un agent aqueux, où le sel de l'autre base se dissout dans la phase aqueuse et le produit valorisable ou la solution du produit valorisable dans un solvant approprié et la base auxiliaire forment au moins une phase non aqueuse séparée ; et
d) élimination par distillation d'au moins une partie du solvant le cas échéant présent de ladite au moins une phase non aqueuse obtenue dans l'étape c), avec formation de deux phases liquides non miscibles.

2. Procédé selon la revendication 1, **caractérisé en ce que** la base auxiliaire est séparée et recyclée dans le procédé.

3. Procédé selon l'une quelconque des revendications 1 ou 2, **caractérisé en ce que** la base auxiliaire est la triéthylamine, la tri-n-propylamine ou la tri-n-butylamine.

4. Procédé selon l'une quelconque des revendications 1 à 3, **caractérisé en ce que** l'acide est libéré au cours d'une réaction de phosphorylation ou de thiophosphorylation.
